# EUROPEAN PATENT SPECIFICATION

(11) **EP 3 228 120 B1**
(45) Date of publication and mention of the grant of the patent: **15.07.2026**
(21) Application number: 15787152.6
(22) Date of filing: 14.10.2015
(51) Int. Cl.: H04W 36/00, H04L 5/00, H04W 76/15

(54) **A METHOD, APPARATUS AND SYSTEM FOR DUAL CONNECTIVITY HANDOVER INITIATED BY SOURCE BASE STATION BECOMING THE FUTURE SECONDARY BASE STATION**
VERFAHREN, VORRICHTUNG UND SYSTEM FÜR DUALE KONNEKTIVITÄTSÜBERGABE DURCH AUSGANGSBASISSTATION ALS ZUKÜNFTIGE SEKUNDÄRBASISSTATION
PROCÉDÉ, APPAREIL ET SYSTÈME POUR TRANSFERT À DOUBLE CONNECTIVITÉ INITIÉ PAR UNE STATION DE BASE SOURCE EN TRAIN DE DEVENIR LA FUTURE STATION DE BASE SECONDAIRE

(30) Priority: 04.12.2014 IN 3531DE2014
(43) Date of publication of application: 11.10.2017
(73) Proprietor: Nokia Solutions and Networks Oy, 02610 Espoo (FI)
(72) Inventor: CHIBA, Tsunehiko, Saitama Saitama 339-0042 (JP); SELVAGANAPATHY, Srinivasan, Bangalore 560117 (IN)
(74) Representative: Nokia EPO representatives
(86) International application number: PCT/EP2015/073790
(87) International publication number: WO 2016/087104

(56) References cited:
- WO-A1-2013/170789
- US-A1- 2014 335 869
- US-A1- 2015 071 250
- ERICSSON: "Dual connectivity - mobility scena", vol. RAN WG3, no. Prague, Czech Republic; 20140210 - 20140214, 9 February 2014 (2014-02-09), XP050738785, Retrieved from the Internet <URL:http://www.3gpp.org/ftp/Meetings_3GPP_SYNC/RAN/RAN3/Docs/> [retrieved on 20140209]
- KYOCERA: "Handover enhancements with dual connectivity", vol. RAN WG2, no. Prague, Czech Republic; 20140210 - 20140214, 9 February 2014 (2014-02-09), XP050791998, Retrieved from the Internet <URL:http://www.3gpp.org/ftp/Meetings_3GPP_SYNC/RAN2/Docs/> [retrieved on 20140209]
- LG ELECTRONICS INC: "Discussion on small cell on/off operation", vol. RAN WG3, no. San Jose Del Cabo, Mexico; 20140331 - 20140404, 30 March 2014 (2014-03-30), XP050795396, Retrieved from the Internet <URL:http://www.3gpp.org/ftp/Meetings_3GPP_SYNC/RAN3/Docs/> [retrieved on 20140330]

## Description

The present application relates to methods and apparatuses and in particular but not exclusively, to dual connectivity.

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communications may comprise, for example, communication of data for carrying communications such as voice, electronic mail (email), text message, multimedia and/or content data and so on. Non-limiting examples of services provided include two-way or multi-way calls, data communication or multimedia services and access to a data network system, such as the Internet.

In a wireless communication system at least a part of communications between at least two stations occurs over a wireless link. Examples of wireless systems include public land mobile networks (PLMN), satellite based communication systems and different wireless local networks, for example wireless local area networks (WLAN). The wireless systems can typically be divided into cells, and are therefore often referred to as cellular systems.

A user can access the communication system by means of an appropriate communication device or terminal. A communication device of a user is often referred to as user equipment (UE). A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. ERICSSON, "Dual connectivity - mobility scenarios", vol. RAN WG3, no. Prague, Czech Republic; 20140210 - 20140214, (20140209), 3GPP DRAFT; R3-140346, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE relates to mobility scenarios during dual connectivity.

KYOCERA, "Handover enhancements with dual connectivity", vol. RAN WG2, no. Prague, Czech Republic; 20140210 - 20140214, (20140209), 3GPP DRAFT; R2-140698_DC_HO, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE relates to discussions on handover enhancements with dual connectivity.

In a first aspect there is provided a method according to claim 1, in which a controlling initiation comprises providing a handover request to the first base station.

In a second aspect there is provided a method according to claim 2.

In a third aspect there is provided a method according to claim 3.

The method comprises receiving a handover request from the first base station, wherein the handover request comprises secondary cell resource group information.

The secondary cell resource group information may comprise a flag indicating current user equipment resources as secondary cell group resources.

In a fourth aspect there is provided an apparatus comprising means for performing any one of the steps the method of the first, second and/or third aspects.

In the above, many different embodiments have been described. It should be appreciated that further embodiments may be provided by the combination of any two or more of the embodiments described above.

Embodiments will now be described, by way of example only, with reference to the accompanying Figures in which:
Figure 1 shows a schematic diagram of an example communication system comprising a base station and a plurality of communication devices;
Figure 2 shows a schematic diagram, of an example mobile communication device;
Figure 3 shows a flow chart of a method of dynamically adjusting thresholds;
Figure 4 shows a schematic diagram of an example control apparatus;
Figure 5 shows a method of handover according to the core of present invention.
Figure 6 shows the principle protocol message flows according to present invention.
Figure 7 shows an example implementation according to which the RRC connection is redirected from SeNB to MeNB before bearer setup
Figure 8 shows an example of a control apparatus for a communication system.

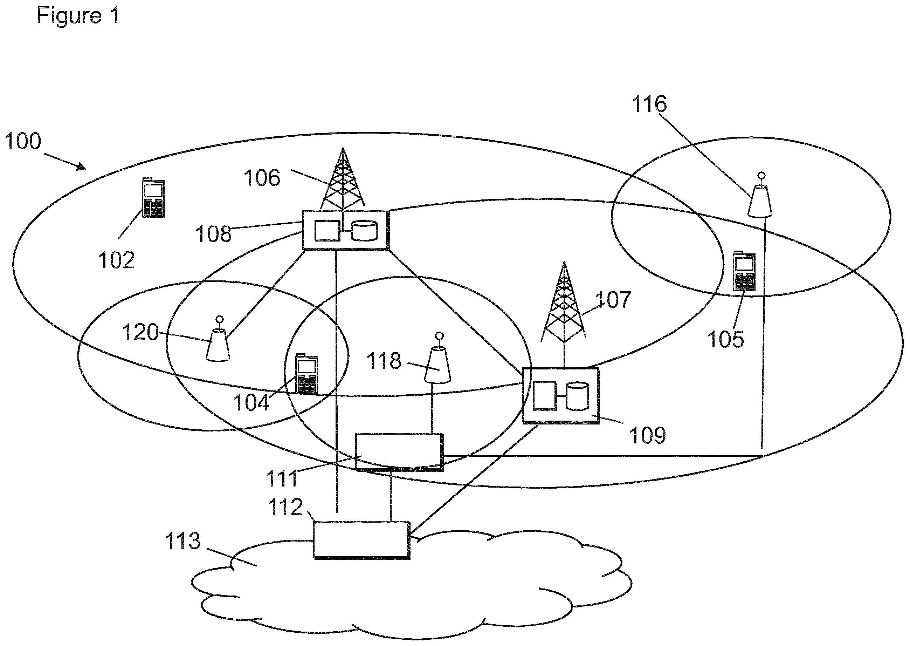

Before explaining in detail the examples, certain general principles of a wireless communication system and mobile communication devices are briefly explained with reference to Figures 1 to 2 to assist in understanding the technology underlying the described examples.

In a wireless communication system 100, such as that shown in figure 1, mobile communication devices or user equipment (UE) 102, 104, 105 are provided wireless access via at least one base station or similar wireless transmitting and/or receiving node or access point. Base stations are typically controlled by at least one appropriate controller apparatus, so as to enable operation thereof and management of mobile communication devices in communication with the base stations. The controller apparatus may be located in a radio access network (e.g. wireless communication system 100) or in a core network (not shown) and may be implemented as one central apparatus or its functionality may be distributed over several apparatus. The controller apparatus may be part of the base station and/or provided by a separate entity such as a Radio Network Controller. In Figure 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller.

LTE systems may however be considered to have a so-called "flat" architecture, without the provision of RNCs; rather the (e)NB is in communication with a system architecture evolution gateway (SAE-GW) and a mobility management entity (MME), which entities may also be pooled meaning that a plurality of these nodes may serve a plurality (set) of (e)NBs. Each UE is served by only one MME and/or S-GW at a time and the (e)NB keeps track of current association. SAE-GW is a "high-level" user plane core network element in LTE, which may consist of the S-GW and the P-GW (serving gateway and packet data network gateway, respectively). The functionalities of the S-GW and P-GW are separated and they are not required to be co-located.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided.

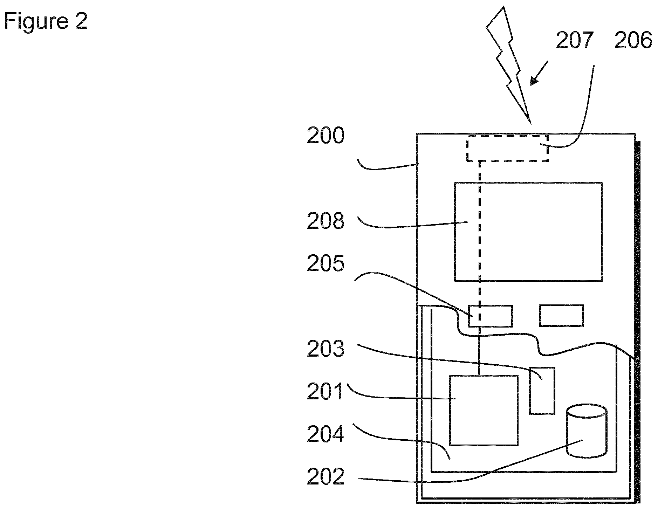

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples include a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services include two-way or multi-way calls, data communication or multimedia services or simply an access to a data communications network system, such as the Internet. Users may also be provided broadcast or multicast data. Non-limiting examples of the content include downloads, television and radio programs, videos, advertisements, various alerts and other information.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The communication devices 102, 104, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

An example of wireless communication systems are architectures standardized by the 3rd Generation Partnership Project (3GPP). A latest 3GPP based development is often referred to as the long term evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE employs a mobile architecture known as the Evolved Universal Terrestrial Radio Access Network (E-UTRAN). Base stations of such systems are known as evolved or enhanced Node Bs (eNBs) and provide E-UTRAN features such as user plane Radio Link Control/Medium Access Control/Physical layer protocol (RLC/MAC/PHY) and control plane Radio Resource Control (RRC) protocol terminations towards the communication devices. Other examples of radio access system include those provided by base stations of systems that are based on technologies such as wireless local area network (WLAN) and/or WiMax (Worldwide Interoperability for Microwave Access). A base station can provide coverage for an entire cell or similar radio service area.

Dual connectivity is a mode of operation of a UE in connected, e.g. RRC_CONNECTED, mode. The UE is configured with a master cell group (MCG) and a secondary cell group (SCG).

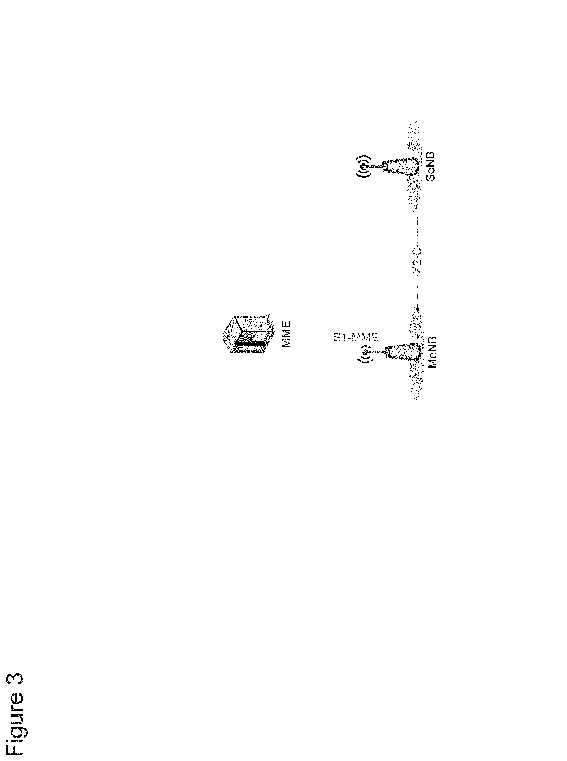

Figure 3 shows a schematic diagram of C-Plane connectivity of eNBs involved in dual connectivity. The interface between the MeNB and the MME is S1-MME. The interface between the MeNB and the SeNB is X2-C.

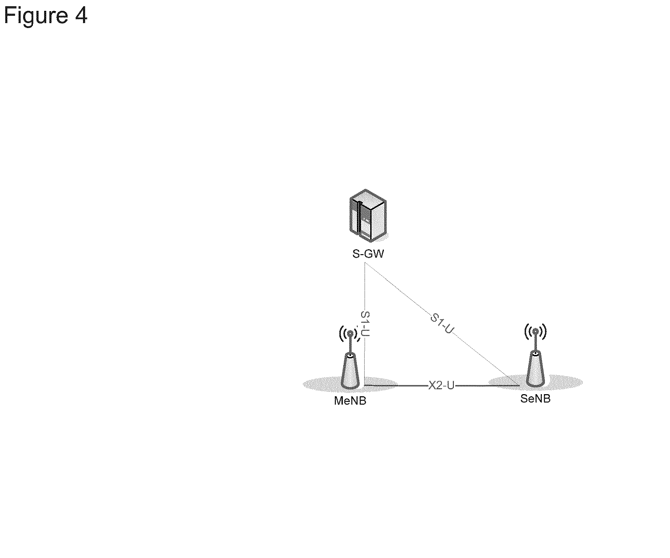

Figure 4 shows a schematic diagram of U-plane connectivity of eNBs involved in dual connectivity. The interface between the MeNB and the S-GW, and between the SeNB and the S-GW is S1-U. The interface between the MeNb and the SeNB is X2-U.

In dual connectivity, there are three types of bearers. MCG bearers, split bearers and SCG bearers. For MCG bearers, the MeNB is U-plane connected to the S-GW via S1-U, the SeNB is not involved in the transport of user plane data. For split bearers, the MeNB is U-plane connected to the S-GW via S1-U and the MeNB and the SeNB are interconnected via X2-U. For SCG bearers, the SeNB is directly connected with the S-GW via S1-U.

In the case where a UE sets up an RRC connection and bearers in SeNB in single connectivity mode and the SeNB detects, via inter-frequency measurement, a target eNB which is capable of dual connectivity, handover from SeNB to MeNb (i.e. single connectivity mode to dual connectivity mode) may be performed. Therefore the handover from SeNb to MeNB is triggered, i.e. single connectivity mode to dual connectivity mode is triggered. To get the benefit of reliability of RRC connection and/or more throughput offered by dual connectivity, the SeNB may move the RRC connection the MeNB. However, some or all of the MeNB bearers or SeNB bearers should keep the same throughput.

A SeNB may firstly perform X2 handover towards MeNB, and the MeNB adds the SeNB previously serving the UE in single connectivity mode. This case may occur when a UE starts its session from a SeNB but decides to move the mobility anchor to the MeNB so that the RRC connection is not lost when the UE moves across SeNBs or when the UE moves in and out of the SeNB. The purpose of X2 handover from SeNB to MeNB is to change the RRC-connection from SeNB to MeNB but allow the bearers to continue with the SeNB so that the user throughput and reliability of the connection may be maintained. To achieve this purpose, the handover from the SeNB to MeNB may be performed first, followed by the addition of the same SeNB as the SCG for the UE. This may introduce additional signal procedures towards the UE, as well as across nodes. The user traffic may be interrupted during handover from SeNB to MeNB and when the bearers are moved back to SeNB as part of SeNB addition.

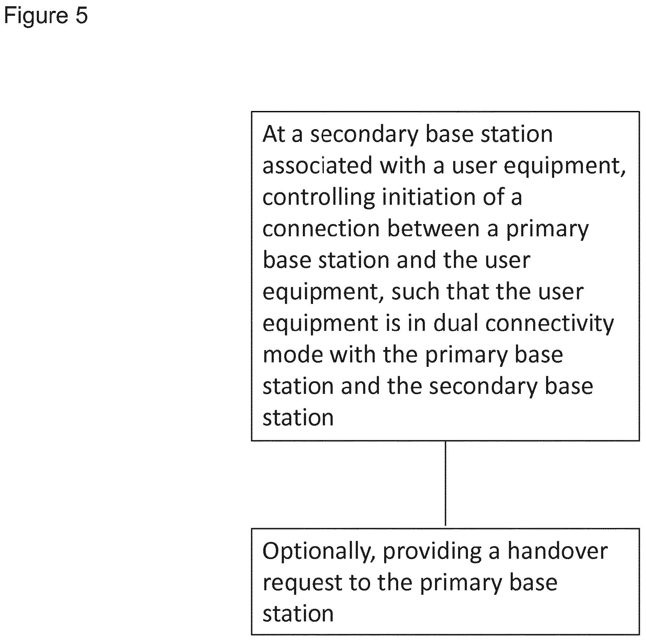

Figure 5 shows a method of a handover procedure according to the core of present invention. The method comprises, at a secondary base station associated with a user equipment, controlling initiation of a connection between a primary base station and the user equipment, such that the user equipment is in dual connectivity mode with the primary base station and the secondary base station. A handover procedure using a method such as that of figure 5 which allows the handover of a UE from SeNB to MeNB with the UE reconfigured as dual connectivity with the same SeNB as SCG for the UE.

A single handover procedure performed in line with the method of figure 5 results in movement of the RRC-Connection and Signalling SRB to MeNB while continuing user-plane traffic via SeNB without any data interruption.

Redirecting the dual connectivity capable UE prior to data bearer setup to suitable MeNB may result in UE setting up the dual connection along with bearer setup in the next RRC-connection at MeNB.

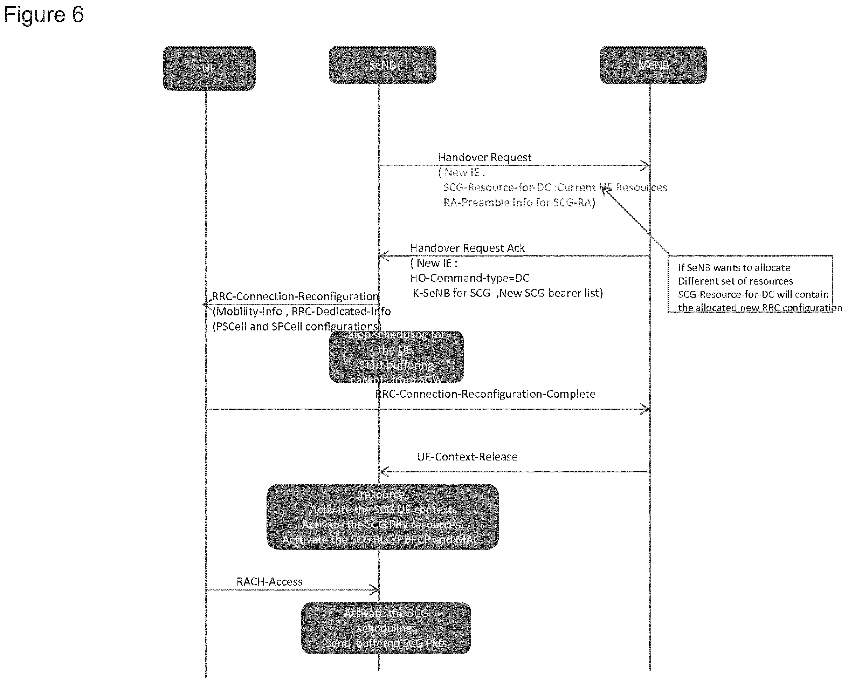

In a first implementation of a method according to figure 5, an X2 handover may be combined with SCG resource allocation. Figure 6 shows an implementation of this option.

In a first step, SeNB indicates
for example via an additional flag, in an X2 Handover Request message, that it would like to re-use the current allocated UE resources as SCG resources after handover. Alternatively or in addition, SeNB may allocate new resources and indicate the proposed SCG configuration to be included in an RRC-Reconfiguration message.

MeNB may use the indication and/or proposed SCG configuration and may consider this message as SCG resource allocation confirmation (i.e. the one included in SeNB addition request acknowledgement). The MeNB may retrieve the required parameters of SCG configuration from the current UE context transferred from the SeNB. [X2-handover-req=>RRC-Context]

MeNB may indicate that the RRC-Reconfiguration includes the SCG-configuration as requested via additional flag in X2 Handover Response message.

SeNB may switch the current resources as SCG resources on reception of UE Context Release message from MeNB and RA from the UE on the given RACH-resources.

As the dedicated bearers of SeNB are converted as SCG bearers, there may be no need for data forwarding between SeNB and MeNB during handover.

The S1 Path Switch message at the end of procedure can indicate that there is no change in UP endpoints. The S1 Path Switch message will terminate at the MME and avoid additional signalling towards the SGW.

If the UE has SIPTO PDN connections connected to its LGW prior to the handover, this bearer may continue after this handover without the need for release of the PDP context.

In contrast, in existing handover procedures, where the UE has SIPTO bearers prior to handover, the LGW may trigger deactivation of the PDN connection on successful handover.

It may also be possible to move some of SCG bearers to MCG bearers as part of this procedure. When MeNB decides to move some existing SCG bearers, it can modify the RRC reconfiguration message accordingly, based on the received SCG-configuration and MeNB configuration. If the final configuration in RRC Reconfiguration releases the existing SCG bearers, this can be indicated in the Handover Response message along with the data forwarding information. As this does not change the SCG resource configurations other than release of some bearers, no explicit acknowledgment is required.

The MSC for X2-handover-request /X2-Handover-request-Ack may contain an additional parameter for switching the UE context to SCG.

An additional mapping table indicating high level mapping of UE-Context content to SCG-configuration may be provided. It may be possible to retrieve the SCG configuration from the RRC-context sent in Handover Request message itself.

Additional information in the messages may be used for informing RA-Resource for RA towards SCG (From SeNB to MeNB) and MeNB to SeNB to indicate the security key S-KeNB to be used for the SCG bearers after handover.

This implementation involves switching the RRC/S1/SRB alone from SeNB to MeNB so that the RRC connection is maintained at MeNB during further SCG mobility. When the UE starts, data-transfer via SeNB has started already, and the UE may experience improved radio-link due to proximity to SeNB. Since it may be preferable to continue when the UE is 'promoted' as dual connectivity, the default procedure to move the SRB alone to MeNB. Later, based on mobility pattern, MeNB may decide to switch the bearer to split bearer if needed.

A method such as that of figure 6 may be suitable for movement of mobility anchor from SeNB to MeNB after the UE establishes all the data bearers via SeNB. This option may require changes to the standard X2 based handover procedure.

However, the benefit for end user is more as this option may allows faster and seamless movement of mobility anchor from SeNB to MeNB. In this option there may be no impact to data traffic if the bearers prior to handover are converted as SCG bearers during handover. If the MeNB decides to move or change the bearer as split bearer as part of handover there maybe interruption to ongoing data traffic.

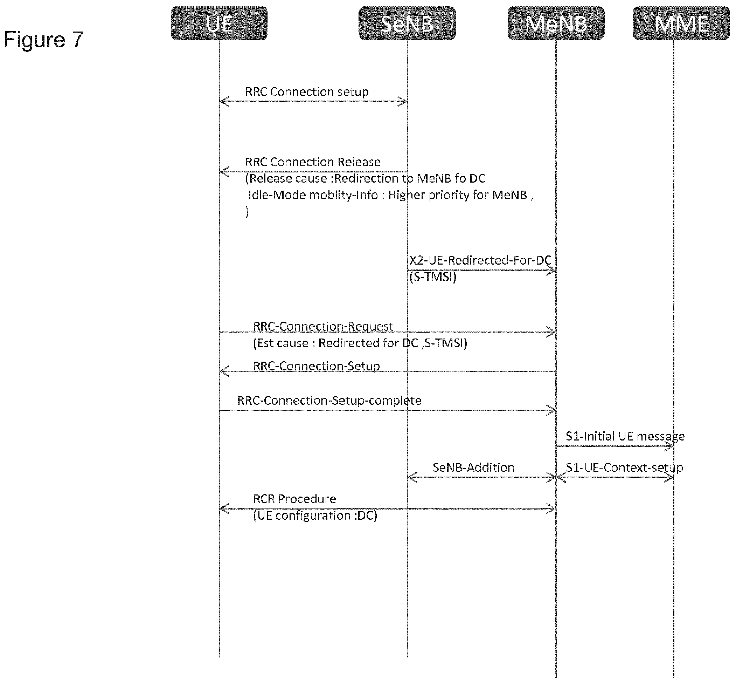

By way of reference,. Figure 5 may also be implemented as shown in figure 7, in which RRC connection is redirected from SeNB to MeNB before bearer setup.

SeNB redirects the dual connectivity capable UE, on RRC connection setup complete along with indication to camp on to MeNB.

SeNB may indicate to target MeNB the S-TMSI information which is redirected so that MeNB can start dual connectivity on RRC connection setup itself without waiting for measurement reports. On reception of RRC-Connection-Request from this S-TMSI, the MeNB knows that the UE is redirected based on the "pre-information" received from the SeNB.

MeNB may set up dual connectivity along with S1 setup and UE becomes dual connectivity. The MeNB can decide how to whetehr to configure the eRAB as MCG, split or SCG.

MeNB knows that the UE is redirected for dual connectivity based on prior information received from the SeNB. This information may be used to setup SCG with this SeNB without waiting for UE measurements.

Alternatively, SeNB may provide the list of cells connected to SeNB which are capable of dual connectivity in the RRC Connection Release message to UE. UE may include the measurement results of these cells as additional information "DC-Target-Cell-Measurements" in the RRC-Connection setup complete. MeNB can trigger SeNB Addition message towards the best target SCell as part of S1-UE-Context setup procedure itself. This allows MeNB to setup the dual connectivity immediately on RRC connection setup completion.

A method such as that of figure 7 may trigger the redirection of dual connectivity capable UE to MeNB so that the UE is configured as dual connectivity in next RRC connection as part of bearer setup itself. As the dual connectivity configuration happens along with bearer setup itself, there may be no impact to user data in this option irrespective of the bearer type.

It should be understood that each block of the flowcharts of Figure 5 to 7 and any combination thereof may be implemented by various means or their combinations, such as hardware, software, firmware, one or more processors and/or circuitry.

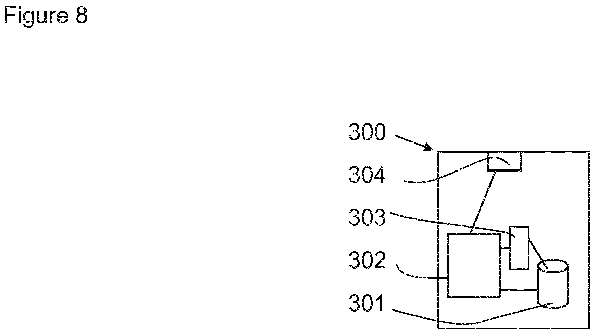

Parts of the method may be implemented on a control apparatus as shown in figure 8. Figure 8 shows an example of a control apparatus for a communication system, for example to be coupled to and/or for controlling a station of an access system, such as an access point, e.g. a base station or (e) node B or a WLAN AP, or a node of a core network such as an MME or operations and management (O&M) node, or a server or host. The method may be implemented in a single control apparatus or across more than one control apparatus. The control apparatus may be integrated with or external to an access point or node or module of a core network. In some embodiments, APs comprise a separate control apparatus unit or module. In other embodiments, the control apparatus can be another network element such as a radio network controller or a spectrum controller. In some embodiments, each AP, or base station, may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head. For example the control apparatus 300 can be configured to execute an appropriate software code to provide the control functions.

It should be understood that the apparatuses may include or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to LTE, similar principles can be applied in relation to other cellular networks and wireless local area networks and to any other communication system where dual connectivity is supported. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they include program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), FPGA, gate level circuits and processors based on multi core processor architecture, as non limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. The scope of this invention is defined in the appended claims.

## Claims

1. A method of handover performed by a secondary base station, SeNB, (107) associated with a user equipment, UE (104), the method comprising:
controlling initiation of a connection between a primary base station, MeNB (106) and the user equipment (104) to bring the user equipment (104) in a dual connectivity mode with the primary base station, MeNB (106) and the secondary base station, SeNB (107) with the same SeNB as a secondary cell group for the user equipment (104);
reconfiguring the user equipment (104) with the same SeNB as secondary cell group to move the RRC-Connection and Signalling SRB to the primary base station, MeNB (106) while continuing user-plane traffic via the secondary base station, SeNB (107) without any data interruption,
wherein controlling initiation of the connection between the primary base station, MeNB (106) and the user equipment (104) includes sending a Handover Request message from the secondary base station SeNB (107) to the primary base station, MeNB (106) and receiving a Handover Request ACK message from the primary base station, MeNB (106) at the secondary base station, SeNB (107), and wherein reconfiguring the user equipment (104) with the same SeNB as secondary cell group includes sending an RRC-Connection-Reconfiguration message from the secondary base station, SeNB (107) to the user equipment (104),
wherein the controlling initiation comprises: providing a handover request comprising secondary cell group resource information to the primary base station (106).

2. A method of operating a primary base station (106) capable of dual connectivity, the method comprising:
receiving information from a secondary base station (107) associated with a user equipment (104) in a handover request message;
using said information to initiate a handover procedure by which a radio resource control connection and signalling radio bearer for the user equipment are moved from the secondary base station to the primary base station while user-plane traffic for the user equipment is continued via the secondary base station, with the user equipment in dual connectivity mode with the secondary and primary base stations; and
sending a handover request acknowledge message to the secondary base station (107),
wherein the handover request comprises secondary cell resource group information.

3. A method according to claim 1 or claim 2 wherein the secondary cell resource group information comprises a flag indicating the current user equipment (104) resources as secondary cell group resources.

4. A secondary base station (107) comprising means for:
controlling initiation of a connection between a primary base station, MeNB (106) and the user equipment (104) to bring the user equipment (104) in a dual connectivity mode with the primary base station, MeNB (106) and the secondary base station, SeNB (107) with the same SeNB as a secondary cell group for the user equipment (104);
reconfiguring the user equipment (104) with the same SeNB as secondary cell group to move the RRC-Connection and Signalling SRB to the primary base station, MeNB (106) while continuing user-plane traffic via the secondary base station, SeNB (107) without any data interruption,
wherein controlling initiation of the connection between the primary base station, MeNB (106) and the user equipment (104) includes sending a Handover Request message from the secondary base station SeNB (107) to the primary base station, MeNB (106) and receiving a Handover Request ACK message from the primary base station, MeNB (106) at the secondary base station, SeNB (107), and wherein reconfiguring the user equipment (104) with the same SeNB as secondary cell group includes sending an RRC-Connection-Reconfiguration message from the secondary base station, SeNB (107) to the user equipment (104),
wherein the controlling initiation comprises: providing a handover request comprising secondary cell group resource information to the primary base station (106).

5. A primary base station (106) comprising means for:
receiving information from a secondary base station (107) associated with a user equipment (104) in a handover request message;
using said information to initiate a handover procedure by which a radio resource control connection and signalling radio bearer for the user equipment are moved from the secondary base station to the primary base station while user-plane traffic for the user equipment is continued via the secondary base station, with the user equipment in dual connectivity mode with the secondary and primary base stations; and
sending a handover request acknowledge message to the secondary base;
receiving a handover request from the first base station, wherein the handover request comprises secondary cell resource group information.

6. The secondary base station according to claim 4, wherein the secondary cell resource group information comprises a flag indicating the current user equipment (104) resources as secondary cell group resources.

7. The primary base station according to claim 5, wherein the secondary cell resource group information comprises a flag indicating the current user equipment (104) resources as secondary cell group resources.

## Patentansprüche

1. Verfahren zum Handover, durchgeführt durch eine sekundäre Basisstation, SeNB, (107), die einem Benutzergerät, UE (104), zugeordnet ist, wobei das Verfahren umfasst:
Steuern der Initiierung einer Verbindung zwischen einer primären Basisstation, MeNB (106), und dem Benutzergerät (104), um das Benutzergerät (104) in einen Modus mit dualer Konnektivität mit der primären Basisstation, MeNB (106), und der sekundären Basisstation, SeNB (107), zu bringen, wobei dasselbe SeNB als sekundäre Zellgruppe für das Benutzergerät (104) dient;
Rekonfigurieren des Benutzergeräts (104) mit demselben SeNB als sekundäre Zellgruppe, um die RRC-Verbindung und den Signalling SRB zu der primären Basisstation, MeNB (106), zu verschieben, während der Verkehr auf der Nutzerebene über die sekundäre Basisstation, SeNB (107), ohne jegliche Datenunterbrechung fortgesetzt wird,
wobei das Steuern der Initiierung der Verbindung zwischen der primären Basisstation, MeNB (106), und dem Benutzergerät (104) das Senden einer Handover-Request-Nachricht von der sekundären Basisstation SeNB (107) an die primäre Basisstation, MeNB (106), und das Empfangen einer Handover-Request-ACK-Nachricht von der primären Basisstation, MeNB (106), an der sekundären Basisstation, SeNB (107), umfasst, und wobei das Rekonfigurieren des Benutzergeräts (104) mit demselben SeNB als sekundäre Zellgruppe das Senden einer RRC-Connection-Reconfiguration-Nachricht von der sekundären Basisstation, SeNB (107), an das Benutzergerät (104) umfasst,
wobei das Steuern der Initiierung umfasst: Bereitstellen einer Handover-Anforderung, die Ressourceninformationen einer sekundären Zellgruppe (secondary cell group resource information) umfasst, an die primäre Basisstation (106).

2. Verfahren zum Betreiben einer primären Basisstation (106), die zu dualer Konnektivität fähig ist, wobei das Verfahren umfasst:
Empfangen von Informationen von einer sekundären Basisstation (107), die einem Benutzergerät (104) zugeordnet ist, in einer Handover-Anforderungsnachricht;
Verwenden der genannten Informationen, um eine Handover-Prozedur einzuleiten, durch welche eine Funkressourcen-Steuerverbindung und ein Signalisierungs-Funkträger für das Benutzergerät von der sekundären Basisstation zu der primären Basisstation verschoben werden, während der Verkehr auf der Nutzerebene für das Benutzergerät über die sekundäre Basisstation fortgesetzt wird, wobei sich das Benutzergerät in einem Modus dualer Konnektivität mit der sekundären und der primären Basisstation befindet; und
Senden einer Handover-Anforderungs-Bestätigungsnachricht an die sekundäre Basisstation (107),
wobei die Handover-Anforderung Informationen einer sekundären Zellressourcengruppe (secondary cell resource group information) umfasst.

3. Verfahren nach Anspruch 1 oder Anspruch 2, wobei die Informationen der sekundären Zellressourcengruppe ein Flag umfassen, das die aktuellen Ressourcen des Benutzergeräts (104) als Ressourcen der sekundären Zellgruppe anzeigt.

4. Sekundäre Basisstation (107), umfassend Mittel zum:
Steuern der Initiierung einer Verbindung zwischen einer primären Basisstation, MeNB (106), und dem Benutzergerät (104), um das Benutzergerät (104) in einen Modus mit dualer Konnektivität mit der primären Basisstation, MeNB (106), und der sekundären Basisstation, SeNB (107), zu bringen, wobei dasselbe SeNB als sekundäre Zellgruppe für das Benutzergerät (104) dient;
Rekonfigurieren des Benutzergeräts (104) mit demselben SeNB als sekundäre Zellgruppe, um die RRC-Verbindung und den Signalling SRB zu der primären Basisstation, MeNB (106), zu verschieben, während der Verkehr auf der Nutzerebene über die sekundäre Basisstation, SeNB (107), ohne jegliche Datenunterbrechung fortgesetzt wird,
wobei das Steuern der Initiierung der Verbindung zwischen der primären Basisstation, MeNB (106), und dem Benutzergerät (104) das Senden einer Handover-Request-Nachricht von der sekundären Basisstation SeNB (107) an die primäre Basisstation, MeNB (106), und das Empfangen einer Handover-Request-ACK-Nachricht von der primären Basisstation, MeNB (106), an der sekundären Basisstation, SeNB (107), umfasst, und wobei das Rekonfigurieren des Benutzergeräts (104) mit demselben SeNB als sekundäre Zellgruppe das Senden einer RRC-Connection-Reconfiguration-Nachricht von der sekundären Basisstation, SeNB (107), an das Benutzergerät (104) umfasst,
wobei das Steuern der Initiierung umfasst: Bereitstellen einer Handover-Anforderung, die Ressourceninformationen einer sekundären Zellgruppe (secondary cell group resource information) umfasst, an die primäre Basisstation (106).

5. Primäre Basisstation (106), umfassend Mittel zum:
Empfangen von Informationen von einer sekundären Basisstation (107), die einem Benutzergerät (104) zugeordnet ist, in einer Handover-Anforderungsnachricht;
Verwenden der genannten Informationen, um eine Handover-Prozedur einzuleiten, durch welche eine Funkressourcen-Steuerverbindung und ein Signalisierungs-Funkträger für das Benutzergerät von der sekundären Basisstation zu der primären Basisstation verschoben werden, während der Verkehr auf der Nutzerebene für das Benutzergerät über die sekundäre Basisstation fortgesetzt wird, wobei sich das Benutzergerät in einem Modus dualer Konnektivität mit der sekundären und der primären Basisstation befindet; und
Senden einer Handover-Anforderungs-Bestätigungsnachricht an die sekundäre Basisstation;
Empfangen einer Handover-Anforderung von der ersten Basisstation, wobei die Handover-Anforderung Informationen einer sekundären Zellressourcengruppe umfasst.

6. Sekundäre Basisstation nach Anspruch 4, wobei die Informationen der sekundären Zellressourcengruppe ein Flag umfassen, das die aktuellen Ressourcen des Benutzergeräts (104) als Ressourcen der sekundären Zellgruppe anzeigt.

7. Primäre Basisstation nach Anspruch 5, wobei die Informationen der sekundären Zellressourcengruppe ein Flag umfassen, das die aktuellen Ressourcen des Benutzergeräts (104) als Ressourcen der sekundären Zellgruppe anzeigt.

## Revendications

1. Procédé de transfert intercellulaire (handover) exécuté par une station de base secondaire, SeNB, (107) associée à un équipement utilisateur, UE (104), le procédé comprenant :
le contrôle de l'initiation d'une connexion entre une station de base primaire, MeNB (106) et l'équipement utilisateur (104) pour faire passer l'équipement utilisateur (104) dans un mode de double connectivité avec la station de base primaire, MeNB (106) et la station de base secondaire, SeNB (107), avec le même SeNB en tant que groupe de cellules secondaires pour l'équipement utilisateur (104) ;
la reconfiguration de l'équipement utilisateur (104) avec le même SeNB en tant que groupe de cellules secondaires pour déplacer la RRC-Connection et le Signalling SRB vers la station de base primaire, MeNB (106) tout en poursuivant le trafic du plan utilisateur via la station de base secondaire, SeNB (107) sans aucune interruption de données,
dans lequel le contrôle de l'initiation de la connexion entre la station de base primaire, MeNB (106) et l'équipement utilisateur (104) comprend l'envoi d'un message de Handover Request depuis la station de base secondaire SeNB (107) vers la station de base primaire, MeNB (106) et la réception d'un message Handover Request ACK depuis la station de base primaire, MeNB (106) au niveau de la station de base secondaire, SeNB (107), et dans lequel la reconfiguration de l'équipement utilisateur (104) avec le même SeNB en tant que groupe de cellules secondaires comprend l'envoi d'un message RRC-Connection-Reconfiguration depuis la station de base secondaire, SeNB (107) vers l'équipement utilisateur (104),
dans lequel le contrôle de l'initiation comprend : la fourniture d'une requête de handover comprenant des informations de ressources de groupe de cellules secondaires (secondary cell group resource information) à la station de base primaire (106).

2. Procédé d'exploitation d'une station de base primaire (106) capable de double connectivité, le procédé comprenant :
la réception d'informations provenant d'une station de base secondaire (107) associée à un équipement utilisateur (104) dans un message de requête de handover ;
l'utilisation desdites informations pour initier une procédure de handover par laquelle une connexion de contrôle de ressources radio et un support radio de signalisation pour l'équipement utilisateur sont déplacés de la station de base secondaire vers la station de base primaire tandis que le trafic de plan utilisateur pour l'équipement utilisateur se poursuit via la station de base secondaire, avec l'équipement utilisateur en mode de double connectivité avec les stations de base secondaire et primaire ; et
l'envoi d'un message d'accusé de réception de requête de handover à la station de base secondaire (107),
dans lequel la requête de handover comprend des informations de groupe de ressources de cellules secondaires (secondary cell resource group information).

3. Procédé selon la revendication 1 ou la revendication 2, dans lequel les informations de groupe de ressources de cellules secondaires comprennent un drapeau indiquant les ressources actuelles de l'équipement utilisateur (104) en tant que ressources de groupe de cellules secondaires.

4. Station de base secondaire (107) comprenant des moyens pour :
contrôler l'initiation d'une connexion entre une station de base primaire, MeNB (106) et l'équipement utilisateur (104) pour faire passer l'équipement utilisateur (104) dans un mode de double connectivité avec la station de base primaire, MeNB (106) et la station de base secondaire, SeNB (107), avec le même SeNB en tant que groupe de cellules secondaires pour l'équipement utilisateur (104) ;
reconfigurer l'équipement utilisateur (104) avec le même SeNB en tant que groupe de cellules secondaires pour déplacer la RRC-Connection et le Signalling SRB vers la station de base primaire, MeNB (106) tout en poursuivant le trafic du plan utilisateur via la station de base secondaire, SeNB (107) sans aucune interruption de données,
dans laquelle le contrôle de l'initiation de la connexion entre la station de base primaire, MeNB (106) et l'équipement utilisateur (104) comprend l'envoi d'un message de Handover Request depuis la station de base secondaire SeNB (107) vers la station de base primaire, MeNB (106) et la réception d'un message Handover Request ACK depuis la station de base primaire, MeNB (106) au niveau de la station de base secondaire, SeNB (107), et dans laquelle la reconfiguration de l'équipement utilisateur (104) avec le même SeNB en tant que groupe de cellules secondaires comprend l'envoi d'un message RRC-Connection-Reconfiguration depuis la station de base secondaire, SeNB (107) vers l'équipement utilisateur (104),
dans laquelle le contrôle de l'initiation comprend : la fourniture d'une requête de handover comprenant des informations de ressources de groupe de cellules secondaires (secondary cell group resource information) à la station de base primaire (106).

5. Station de base primaire (106) comprenant des moyens pour :
recevoir des informations provenant d'une station de base secondaire (107) associée à un équipement utilisateur (104) dans un message de requête de handover ;
utiliser lesdites informations pour initier une procédure de handover par laquelle une connexion de contrôle de ressources radio et un support radio de signalisation pour l'équipement utilisateur sont déplacés de la station de base secondaire vers la station de base primaire tandis que le trafic de plan utilisateur pour l'équipement utilisateur se poursuit via la station de base secondaire, avec l'équipement utilisateur en mode de double connectivité avec les stations de base secondaire et primaire ; et
envoyer un message d'accusé de réception de requête de handover à la station de base secondaire ;
recevoir une requête de handover provenant de la première station de base, dans laquelle la requête de handover comprend des informations de groupe de ressources de cellules secondaires.

6. Station de base secondaire selon la revendication 4, dans laquelle les informations de groupe de ressources de cellules secondaires comprennent un drapeau indiquant les ressources actuelles de l'équipement utilisateur (104) en tant que ressources de groupe de cellules secondaires.

7. Station de base primaire selon la revendication 5, dans laquelle les informations de groupe de ressources de cellules secondaires comprennent un drapeau indiquant les ressources actuelles de l'équipement utilisateur (104) en tant que ressources de groupe de cellules secondaires.
